## Europäisches Patentamt
## European Patent Office
## Office européen des brevets

(11) Numéro de publication: **0 020 261**
**B1**

(12) **FASCICULE DE BREVET EUROPEEN**

(45) Date de publication du fascicule du brevet:
**14.03.84**

(21) Numéro de dépôt: **80400743.3**

(22) Date de dépôt: **28.05.80**

(51) Int. Cl.³: **B 25 B 5/14,** G 04 D 3/06

(54) **Pince à serrage concentrique.**

(30) Priorité: **29.05.79 FR 7913688**

(43) Date de publication de la demande:
**10.12.80 Bulletin 80/25**

(45) Mention de la délivrance du brevet:
**14.03.84 Bulletin 84/11**

(84) Etats contractants désignés:
**CH DE IT LI**

(56) Documents cités:
**CH - A - 276 206**
**FR - A - 1 275 713**
**FR - A - 2 259 387**
**US - A - 3 145 459**

(73) Titulaire: **SOMAIFA S.A. Société anonyme dite:,**
**F-25210 Bonnetage (FR)**

(72) Inventeur: **Musy, Charles, 2, rue de la Gare,**
**F-25120 Maiche (FR)**

(74) Mandataire: **Bonnetat, Christian, Cabinet PROPI**
**Conseils 23 rue de Léningrad, F-75008 Paris (FR)**

Il est rappelé que: Dans un délai de neuf mois à compter de la date de publication de la mention de la délivrance du brevet euro- péen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

BUNDESDRUCKEREI BERLIN

# Pince à serrage concentrique

La présente invention concerne une pince à serrage concentrique, notamment du type de celles qui, en horlogerie par exemple, permettent de cambrer les glaces de montres en vue de leur pose et de leur dépose.

On connaît, par exemple par le document CH-A-276 206, une pince à serrage concentrique comportant un axe longitudinal et constituée par une tête d'outil formée de mâchoires radiales, régulièrement réparties autour dudit axe et radialement expansibles, et d'une base conique, ainsi que par un corps d'outil comprenant une cavité conique dans laquelle vient prendre place, de façon centrée, la base conique de la tête d'outil, la tête et le corps d'outil étant assemblés par un tirant de serrage longitudinal susceptible de provoquer le serrage des mâchoires et assurant la pénétration de la base conique dans la cavité conique. Une telle pince, qui est comparable à un mandrin, trouve de nombreuses applications industrielles. Toutefois, elle a un champ d'action limité, notamment en ce qui concerne la forme des objets à serrer. Pratiquement, pour serrer des objets de formes très diverses, il faut avoir à sa disposition autant de pinces qu'il y a de formes. En outre, le problème est rendu d'autant plus ardu que la surface de serrage est plus petite.

Cela est particulièrement vrai dans le domaine de l'horlogerie pour poser et déposer les glaces de montres. Certes, on connaît la pince à poser et à déposer les glaces rondes de n'importe quel diamètre. Mais il n'en va pas de même des glaces de forme. Pour poser et déposer de telles glaces, il faut soit avoir à sa disposition une pince pour chaque forme de glace, soit utiliser des tasseaux montés sur une potence. En outre, l'utilisation d'une pince mal adaptée à la forme de la glace ou l'utilisation de tasseaux est susceptible de marquer ou de rayer cette glace et de la rendre impropre à un nouvel usage.

Pour éviter ces inconvénients, le document FR-A-2 259 387 décrit une pince pour le remplacement de verres de montres ayant des groupes individuels d'organes préhenseurs juxtaposés, dont les positions radiales de serrage sont réglables individuellement. Cependant, une telle pince non seulement présente une structure compliquée, amis encore ne peut procurer que des plages d'appui discontinues à la périphérie du verre de montre.

La présente invention a pour but de pallier ces inconvénients. Elle a pour objet une pince à serrage concentrique de structure simple dont les organes de serrage, qui peuvent être au préalable réglés latéralement et retenus dans la position désirée, forment un front qui épouse parfaitement la forme de l'objet à serrer.

A cette fin, selon l'invention, la pince du type décrit ci-dessus est caractérisée en ce que chacune des mâchoires radialement expansibles de la tête d'outil sert de support à un jeu de plaquettes de serrage destinées à agripper radialement l'objet à serrer, les plaquettes d'un même jeu étant accolées les unes aux autres de telle sorte que leurs chants dirigés vers l'axe de la pince forment par leur juxtaposition un front de serrage et chacune des plaquettes d'un jeu pouvant être réglée radialement et maintenue dans la position désirée, de manière à modifier le profil du front de serrage et à l'adapter à la forme de l'objet à serrer.

Les avantages obtenus grâce à l'invention consistent essentiellement en ce que les organes de serrage sont susceptibles d'épouser n'importe quelle forme d'objet. En outre, si ces organes de serrage sont confectionnés dans des matières relativement tendres, par exemple en matière plastique, ils ne peuvent blesser l'objet à serrer qui pourra être utilisé à nouveau. De plus, la pince selon l'invention ne nécessite pas une grande surface de serrage. Enfin, en horlogerie, la pince selon l'invention permet, par cambrure, la pose et la dépose des glaces de forme et rend possible l'emboîtage du mouvement par l'espace réservé à la glace.

De préférence, la fixation de chaque jeu de plaquettes sur chaque mâchoire est assurée par une plaque de retenue. Dans un mode avantageux de réalisation, chaque plaquette d'un jeu comporte, du côté de l'objet à serrer, une cavité cylindrique ménagée dans le chant frontal de chaque plaquette et d'axe parallèle à l'axe de la pince, dans laquelle vient prendre place une goupille saillante, également cylindrique et pouvant librement tourner autour de son axe qui est parallèle à celui de la pince, l'extrémité libre des goupilles comportant une découpe adaptée au contour dudit objet à serrer et destinée à entrer en contact avec celui-ci.

Dans ce qui suit, l'invention est exposée plus en détail à l'aide des dessins représentant, à titre d'exemple, un mode d'exécution seulement.

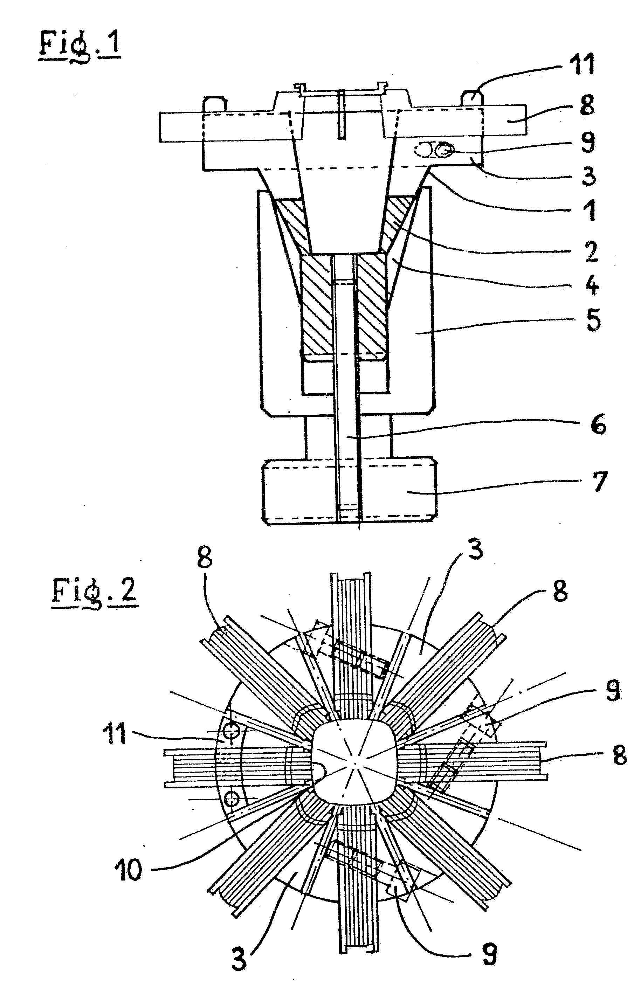

La figure 1 représente une coupe axiale de l'ensemble d'une pince réalisée conformément à la présente invention.

La figure 2 montre une vue de face des organes de serrage.

La figure 3 montre une variante de réalisation des plaquettes de serrage.

La constitution fondamentale de la pince selon les figures comprend une tête d'outil 1 formée d'une base conique 2 et de mâchoires expansibles 3, ainsi qu'un corps d'outil 5 dans lequel une cavité conique 4 est pratiquée. La base conique 2 de la tête d'outil 1 vient prendre place dans la cavité conique 4 du dorps d'outil 5. La tête d'outil 1 et le corps d'outil 5 sont assemblés par un tirant de serrage 6, lequel est actionné grâce au galet moleté 7. Sous l'action du tirant de serrage 6, la base conique 2 de la tête d'outil 1 vient s'insinuer dans la cavité conique 4 du corps d'outil 5; le diamètre supérieur de la base conique 2 de la tête d'outil 1 étant plus grand que celui de la cavité conique 4 du corps d'outil 5, il en résulte un resserrement des mâchoires expansibles 3.

Chacune des mâchoires expansibles 3 de la tête d'outil 1 sert de support à un jeu de plaquettes 8 et comprend une vis de blocage 9 du jeu de plaquettes 8. Lorsque la vis de blocage 9 est desserrée, chacune des plaquettes des jeux 8 peut être avancée ou reculée dans son support. Pour serrer un objet d'une forme quelconque, il suffit donc de régler préalablement l'avance ou le recul de chacune des plaquettes des jeux 8 de telle façon que le front 10 constitué par l'ensemble des plaquettes épouse parfaitement la forme de cet objet, puis de serrer chacune des vis de blocage 9. La pince devient alors opérationnelle pour la forme d'objet choisie.

De préférence, la fixation de chaque jeu de plaquettes 8 est assurée par une plaque de retenue 11.

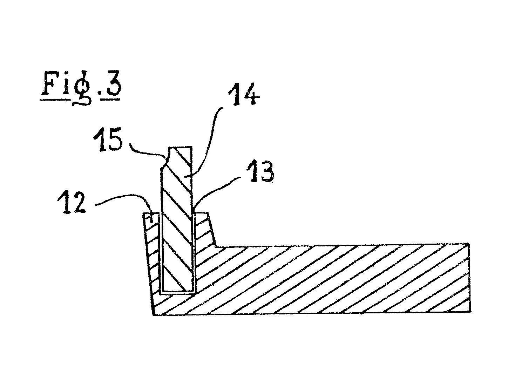

Dans un mode avantageux de réalisation montré par la figure 3, la tête 12 de chaque plaquette d'un jeu 8 comprend une cavité cylindrique 13, dans laquelle vient prendre place une goupille cylindrique saillante 14, pouvant librement tourner autour de son axe. La partie supérieure de la goupille 14 comporte un fraisage de forme 15, destiné à entrer en contact avec l'objet à serrer.

Grâce à la libre rotation des goupilles 14 autour de leur axe, les plaquettes des jeux 8 s'adaptent encore mieux à la forme du contour de l'objet à serrer.

## Revendications

1. Pince à serrage concentrique comportant un axe longitudinal et constituée par une tête d'outil (1) formée de mâchoires (3) radiales, régulièrement réparties autour dudit axe et radialement expansibles et d'une base conique (2), ainsi que par un corps d'outil (5) comprenant une cavité conique (4) dans laquelle vient prendre place, de façon centrée, la base conique (2) de la tête d'outil (1), la tête et le corps d'outil étant assemblés par un tirant de serrage longitudinal (6) susceptible de provoquer le serrage des mâchoires en assurant la pénétration de la base conique (2) dans la cavité conique (4), caractérisée en ce que chacune des mâchoires radialement expansibles (3) de la tête d'outil (1) sert de support à un jeu de plaquettes de serrage (8) destinées à agripper radialement l'objet à serrer, les plaquettes (8) d'un même jeu étant accolées les unes aux autres de telle sorte que leurs chants dirigés vers l'axe de la pince forment par leur juxtaposition un front de serrage (10) et chacune des plaquettes d'un jeu pouvant être réglée radialement et maintenue dans la position désirée, de manière à modifier le profil du front (10) et à l'adapter à la forme de l'objet à serrer.

2. Pince à serrage concentrique selon la revendication 1, caractérisé en ce que la fixation de chaque jeu de plaquettes (8) sur chaque mâchoire est assurée par une plaque de retenue (11).

3. Pince à serrage concentrique selon l'une quelconque des revendications 1 ou 2, caractérisée en ce que chaque plaquette d'un jeu (8) comporte, du côté (12) de l'objet à serrer, une cavité cylindrique (13) ménagée dans le chant frontal de chaque plaquette et d'axe parallèle à l'axe de la pince, dans laquelle vient prendre place une goupille saillante (14), également cylindrique et pouvant librement tourner autour de son axe qui est parallèle à celui de la pince, l'extrémité libre des goupilles comportant une découpe (15) adaptée au contour dudit objet à serrer et destinée à entrer en contact avec celui-ci.

## Patentansprüche

1. Spannzange mit Konzenterspannung und einer Längsachse sowie bestehend aus einem Werkzeugkopf (1), der aus Radialbacken (3) gebildet ist, die in regelmäßigen Abständen um die Achse herum angeordnet und radial dehnbar sind, aus einer konischen Basis (2) und aus einem Werkzeugkörper (5), der einen konischen Hohlraum (4) aufweist, in dem die konische Basis (2) des Werkzeugkopfes (1) mittig aufgenommen wird, wobei der Werkzeugkopf und -körper durch eine longitudinale Spannstange (6) zusammengefügt ist, so daß die Backen durch sie gespannt werden und dabei das Eindringen der konischen Basis (2) in den konischen Hohlraum (4) gewährleisten, dadurch gekennzeichnet, daß jede der radial dehnbaren Backen (3) des Werkzeugkopfes (1) als Träger für einen Satz Spannplatten (8) dient, die den festzuspannenden Gegenstand radial umgreifen, wobei die Platten (8) eines gleichen Satzes aneinander so angehängt sind, daß ihre zur Zangenachse weisenden Schmalseiten in ihrem Nebeneinanderliegen eine Spannvorderfläche (10) bilden und jede der Platten eines Satzes derart radial geregelt und in der gewünschten Stellung gehalten werden kann, daß das Profil der Vorderfläche (10) verändert und der Form des festzuspannenden Gegenstandes angepaßt wird.

2. Spannzange nach Anspruch 1, dadurch gekennzeichnet, daß die Befestigung jedes Satzes der Platten (8) auf jeder Backe durch eine Rückhalteplatte (11) gesichert ist.

3. Spannzange nach einem der Ansprüche 1 oder 2, dadurch gekennzeichnet, daß jede Platte eines Satzes (8) auf der Seite (12) des festzuspannenden Gegenstandes einen auf der Stirnschmalseite jeder Platte ausgebildeten und achsparallel zur Zangenachse liegenden zylindrischen Hohlraum (13) aufweist, von dem ein hervorspringender und ebenfalls zylinderförmiger Stift (14) aufgenommen wird, der sich um seine parallel zur Zange liegenden Achse frei drehen kann, wobei das freie Ende des Stiftes einen Ausschnitt (15) aufweist, der dem Umriß des festzuspannenden Gegenstandes angepaßt ist und mit diesem in Kontakt kommen soll.

## Claims

1. Pliers for concentrical gripping comprising a longitudinal spindle and constituted by a tool head (1) formed by radial jaws (3) regularly distributed about said spindle and radially expansible and by a conical base (2), as well as by as by a tool body (5) comprising a conical cavity (4) in which the conical base (2) of the tool head (1) comes into centred position, the tool head and body being assembled by a longitudinal tie-rod (6) adapted to provoke tightening of the jaws, ensuring penetration of the conical base (2) in the conical cavity (4), characterized in that each of the radially expansible jaws (3) of the tool head (1) serves as support for a set of tightening plates (8) adapted radially to grip the object to be held, the plates (8) of the same set being coupled to one another so that their edges directed towards the axis of the collet form by their juxtaposition a clamping front (10) and each of the plates of a set being able to be adjusted radially and maintained in the desired position, so as to modify the section of the front (10) and to adapt it to the shape of the object to be held.

2. Pliers according to Claim 1, characterized in that the fixing of each set of plates (8) on each jaw is ensured by a retaining plate (11).

3. Pliers according to any one of Claims 1 or 2, characterized in that each plate of a set (8) comprises, on side (12) of the object to be held, a cylindrical cavity (13) made in the front edge of each plate and of axis parallel to the axis of the collet, in which takes position a projecting pin (14) which is likewise cylindrical and adapted to rotate freely about its axis which is parallel to that of the pliers the free end of the pins comprising a cut-out (15) adapted to the contour of said object to be held and adapted to come into contact therewith.

Fig.1

Fig.2

## Fig.3